# EUROPEAN PATENT APPLICATION

(11) **EP 4 354 960 A2**
(43) Date of publication of application: **17.04.2024**
(21) Application number: 23211980.0
(22) Date of filing: 16.12.2019
(51) Int. Cl.: H04W 36/00, H04W 4/46, H04W 4/029, H04W 76/23

(54) **COMMON SIDELINK SPECIAL RESOURCES**

(62) Divisional of application: 19306657.8
(71) Applicant: Mitsubishi Electric R&D Centre Europe B.V., 1119 NS Schiphol Rijk Amsterdam (NL); MITSUBISHI ELECTRIC CORPORATION, Chiyoda-ku Tokyo 100-8310 (JP)
(72) Inventor: CIOCHINA, Cristina, 35708 RENNES CEDEX 7 (FR); KHANFOUCI, Mourad, 35708 RENNES CEDEX 7 (FR); GRESSET, Nicolas, 35708 RENNES CEDEX 7 (FR)
(74) Representative: Plasseraud IP

(57) **Abstract**

Examples include a method for providing sidelink resources to a plurality of mobile devices comprising a specific mobile device. The method comprises providing source sidelink resources to the specific mobile device. The method also comprises receiving an indication that the specific mobile device is moving from the coverage of a source cell to the coverage of a destination cell. The method further comprises negotiating, by a source base station, common sidelink special resources with a destination base station, whereby the source and destination base stations have some common resources. The method also comprises reconfiguring the sidelink resources provided to the specific mobile device from the source sidelink resources to the common sidelink special resources and triggering a handover of the specific mobile device from the source base station to the destination base station.

## Description

### BACKGROUND

A mobile device in communication with a base station covering a cell may be handed over to another base station covering another cell as such devices moves from one cell to another. Such transition from one cell to another can give rise to a discontinuity in the communication process.

### SUMMARY

The invention is defined by the appended independent claims. Additional features and advantages of the concepts herein disclosed are set forth in the description which follows.

The present disclosure describes a method for providing sidelink resources to a plurality of mobile devices comprising a specific mobile device located in a source cell operated by a source base station, the method comprising:
- providing, by the source base station, source sidelink resources to the specific mobile device;
- receiving, at the source base station, an indication that the specific mobile device is moving from the coverage of the source cell to the coverage of the destination cell operated by a destination base station;
- negotiating, by the source base station, common sidelink special resources with the destination base station, whereby the source and destination base stations have some common resources;
- reconfiguring, by the source base station, at least the sidelink resources provided to the specific mobile device from the source sidelink resources to the common sidelink special resources;
- triggering, by the source base station, a handover of the specific mobile device from the source base station to the destination base station.

Such a method permits for example maintaining a vehicle to vehicle communication among a plurality of vehicles as the vehicles move from a cell corresponding to a source base station to a cell corresponding to a different destination base station. In case of the plurality of vehicles spreading across cells corresponding to both the source and destination base stations, some vehicles or mobile devices are for example connected using sidelink resources pertaining to or assigned by the source base station when they are located in a cell corresponding to the source base station, the source sidelink resources being for example using radio resources allocated dynamically by the source base station ('mode 1') or selected by a UE from a set of resources signaled by the source base station or pre-configured at the UE ('mode 2') and being possibly incompatible between the source and destination base station, while vehicles in the transition area between source and destination base station communicate using the common sidelink special resources negotiated by the source base station with the destination base station, whereby the source and destination base stations have some common resources.

Optionally, the method further comprises the source base station identifying the destination base station following the receiving of the indication that the specific mobile device is moving from the source cell to the destination cell, whereby the destination cell is identified as pertaining to a public land mobile network, PLMN, differing from a source base station PLMN, the method further comprising receiving at the source base station and from the specific mobile device, measurements performed on the destination base station. Such measurements may for example permit ascertaining whether the source and destination base stations have some common resources permitting using common sidelink special resources negotiated by the source base station with the destination base station, or not.

Optionally, the common resources comprise a common part of a frequency spectrum. Such common part of a frequency spectrum may for example advantageously comprise a frequency or frequencies as a special resource negotiated by the source base station with the destination base station.

Optionally, the negotiating comprises exchanging between the source and the destination base station one or more of the following information:
- frequency domain resources information;
- time domain resources information;
- common sidelink special resources information;
- geographical limitation information;
- information related to the plurality of mobile devices;
- information related to communication traffic between mobile devices belonging to the plurality of mobile devices;
- time synchronization difference information; or
- frequency synchronization difference information.

The exchange of such information may for example advantageously permit determining specific common resources permitting using common sidelink special resources negotiated by the source base station with the destination base station, by taking such aspects into account.

Optionally, the method further comprises the source base station exchanging data with a multi-access edge computing node, MEC node, whereby the MEC node is monitoring sidelink packet traffic with a network exposure function, NEF, and whereby the MEC node adjusts an error protection process in function of the monitoring. This for example permits taking into account the fact that the quality of communication through common sidelink special resources may differ from the quality of communication through source sidelink resources.

The present disclosure also describes a method for providing sidelink resources to a plurality of vehicles comprising a specific mobile device moving from the coverage of a source cell operated by a source base station to the coverage of a destination cell operated by a destination base station, the method comprising:
- receiving, at the destination base station and from the source base station, a request to negotiate common sidelink special resources with the source base station, whereby the source and destination base stations have some common resources;
- negotiating, by the destination base station, the common sidelink special resources with the source base station;
- receiving, at the destination base station, an indication that the specific mobile device is moving from the coverage of the source cell to the coverage of the destination cell, the specific mobile device operating the common sidelink special resources;
- completing a handover of the specific mobile device from the source base station to the destination base station;
- maintaining, by the destination base station, the common sidelink special resources operated by the specific mobile device, until a destination reconfiguration event occurs;
- reconfiguring, by the destination base station, at least the sidelink resources provided to the specific mobile device from the common sidelink special resources to destination sidelink resources.

Such a method permits for example maintaining a vehicle to vehicle communication among a plurality of vehicles as the vehicles move from a cell corresponding to a source base station to a cell corresponding to a different destination base station. In case of the plurality of vehicles spreading across cells corresponding to both the source and destination base stations, some vehicles or mobile devices are for example connected using common sidelink special resources negotiated by the source base station with the destination base station, whereby the source and destination base stations have some common resources. Communication is reconfigured to destination sidelink resources pertaining to or assigned by the destination base station upon occurrence of a destination reconfiguration event in order to ensure that the common sidelink special resources are maintained during a sufficient time to reduce or prevent disruption of communications during the movement of the plurality of vehicles in the transition area between source and destination base station coverage.

The present disclosure also describes a method for providing sidelink resources to a plurality of mobile devices comprising a specific mobile device moving from the coverage of a source cell operated by a source base station to the coverage of a destination cell operated by a destination base station, the method comprising:
- receiving, from the source base station and at the specific mobile device, source sidelink resources;
- operating, by the specific mobile device, the source sidelink resources to exchange data with at least one other mobile devices comprised in the plurality of mobile devices;
- following an indication that the specific mobile device is moving from the source cell to the destination cell, receiving from the source base station common sidelink special resources negotiated between the source base station and the destination base station, whereby the source and destination base stations have some common resources;
- reconfiguring, by the specific mobile device, at least the sidelink resources from the source sidelink resources to the common sidelink special resources to exchange data with the at least one other mobile devices comprised in the plurality of mobile devices;
- following the reconfiguration of the sidelink resources from the source sidelink resources to the common sidelink special resources, proceeding, at the specific mobile device, with a handover from the source base station to the destination base station;
- maintaining, at the specific mobile device, the common sidelink special resources, until a destination reconfiguration event occurs;
- reconfiguring, at the specific mobile device, at least the sidelink resources from the common sidelink special resources to destination sidelink resources provided by the destination base station.

Such a method may advantageously provide for a smooth transfer between source sidelink to destination sidelink resources through use of the common sidelink special resources in a controlled manner. This could for example contribute to reducing or eliminating a risk of miscommunication between mobile devices of the plurality, avoiding or reducing risks of collisions, or permitting an increased displacement speed while maintaining a communication quality between mobile devices.

Optionally, this method further comprises transmitting, by the specific mobile device and to the source base station one or more of:
- specific mobile device location information;
- a specific mobile device status as member of the plurality of mobile devices;
- an identifier of the plurality of mobile devices;
- information from a radio network information service, RNIS;
- a situation update, the situation update comprising one or more of a report from another mobile device comprised in the plurality of mobile devices;
- sidelink traffic information.

Such transmission may for example contribute to the source base station taking such aspects into account in order to appropriately manage common sidelink special resources.

Optionally, the specific mobile device receives, using the source sidelink resources, from another mobile device comprised in the plurality of mobile devices, one or more of:
- signal measurement information;
- sidelink traffic information.

The reception of such information may advantageously provide information permitting the preparation of a transition to using or requesting usage of common sidelink special resources.

Optionally, the destination reconfiguration event comprises one or more of:
- the expiration of a timer;
- the detection of the presence of some or all mobile devices pertaining to the plurality of mobile devices in the destination cell.

Such example reconfiguration events may permit maintaining usage of common sidelink special resources until the usage of destination sidelink resources is appropriate.

Optionally, the proceeding, at the specific mobile device, with a handover from the source base station to the destination base station further comprises the specific mobile device transmitting through the common sidelink special resources handover information to another mobile device comprised in the plurality of mobile devices. This may advantageously enable a leading role from the specific mobile device, thereby reducing traffic involving the source base station.

The present disclosure also describes a computer-readable storage medium comprising instructions which, when executed by a processor, cause the processor to carry out any of the methods hereby described.

The present disclosure also describes a base station comprising a computing device, the computing device comprising a processor, a memory and a networking module, the processor being configured to operate according to any of methods hereby described.

The present disclosure also describes a mobile device comprising a computing device, the computing device comprising a processor, a memory and a networking module, the processor being configured to operate according to any of methods hereby described.

### BRIEF DESCRIPTION OF THE DRAWINGS

Figure 1 illustrates a method according to an example.
Figure 2 illustrates another method according to an example.
Figure 3 illustrates another method according to an example.
Figure 4 illustrates another method according to an example.
Figure 5 illustrates another method according to an example.
Figure 6 illustrates another method according to an example.
Figures 7A-C illustrates connected mobile devices, base stations and networking entities operating according to example methods.

### DETAILED DESCRIPTION

This disclosure applies to providing sidelink resources to a plurality of mobile devices comprising a specific mobile device. Such mobile communication device may communicate using a networking module. Such a mobile device may be a mobile terminal carried by a human or by a vehicle. The mobile device may be a vehicle comprising a networking module. The mobile device may be carried by a driver or passenger of a vehicle. The mobile device may be configured to be mobile on a road network or in the air. The mobile device may be a drone comprising a networking module. The mobile device may be a car, truck or bus comprising a networking module. The mobile device may be a connected autonomous or partially autonomous vehicle configured to autonomously or partially autonomously drive itself by using radio resources. Autonomous driving may not require a human driver, while partially autonomous driving may require the presence of a human driver in a vehicle to operate.

The specific mobile device is according to this disclosure named as specific in order to differentiate such specific mobile devices from other mobile devices which may interact with this specific mobile device. The specific mobile device may however be similar or different from other mobile devices.

The other mobile devices pertaining to the plurality of mobile devices are mobile devices according to this disclosure, such other mobile device being either similar or different from the specific mobile device, such other mobile device being distinct from the specific mobile device. Such other mobile devices may pertain to a same platoon as the specific mobile device and may have a general direction of movement in the same direction as a general direction of movement of the specific mobile device. Such other mobile devices and the specific mobile devices should in some examples be understood as generally moving in the same direction. Such other mobile devices and the specific mobile devices may move at a same speed or at different speeds. In some examples, a speed of such other mobile device may differ from a speed of the specific mobile device by less than 20%. Such other mobile device should in some examples be understood as reaching or passing through a given point or area after or before the specific mobile device reached or passed through such same point or area. In some examples, such other mobile device passes through a specific point less than 1 second after or before the specific mobile device passing through this same specific point. In some examples, one or more of such other mobile devices pass through a specific point less than 5 second after or before the specific mobile device passing through this same specific point or area. In some examples, one or more of such other mobile devices and the specific mobile device are separated by less than 200 meters. In some examples, one or more of such other mobile devices and the specific mobile device are separated by less than 100 meters.

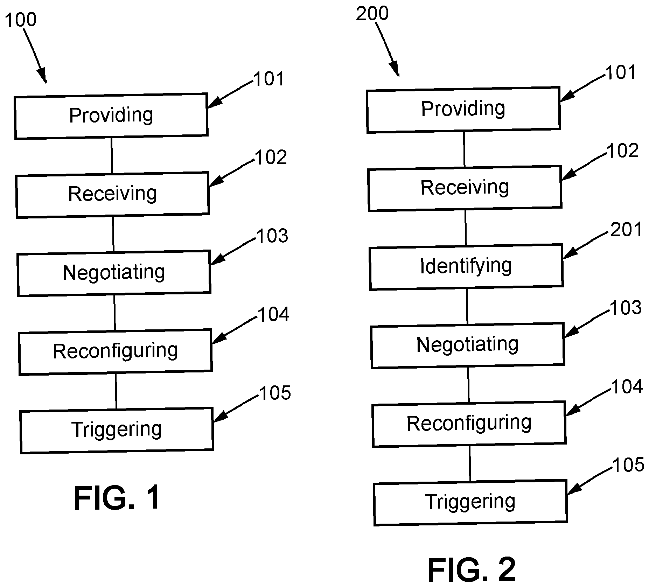

An example method 100, as illustrated in Figure 1, applies to a specific mobile device located in a source cell operated by a source base station. The method 100 comprises block 101 of providing, by the source base station, source sidelink resources to the specific mobile device. Such source sidelink resources may be used by the specific mobile device to connect to or communicate with another mobile device comprised in the plurality of mobile devices. Communication may be understood as exchanging data packets in the context of a communication protocol. Generally speaking, communication may be direct, i.e. directly between devices using respective networking modules, or indirect, i.e. through other intermediate networking devices such as, for example, a base station. Direct communications between device without passing through a base station, for example using sidelink resources as per this description, may use radio resources allocated dynamically and/or semi-statically by a base station ('mode 1'), or resources to be selected autonomously by a user equipment (UE) corresponding to a respective mobile device from a pool of resources which may be signaled by a base station or pre-configured in the UEs ('mode 2'). Mode 1 resource allocation allows a base station to better control the resources, thus limiting interference and avoiding transmission collisions. According to this disclosure, communication between the specific device and one or more other mobile devices takes place in block 101 through source sidelink resources being managed by a source base station operating the source cell, the source sidelink using for example radio resources allocated by a base station (mode 1), whereby the specific mobile devices and other mobile devices with which the specific mobile device communicates using the source sidelink resources are located within the area of coverage of the source base station. The source sidelink resources should be understood as permitting the specific device to transmit signals to at least one other mobile device of the plurality of mobile devices. Radio resources utilization may be operated for example through time/frequency allocation techniques, and/or through spatial re-use techniques. Radio resources utilization may be operated taken into account service Quality of Service requirements such as throughput, delay, packet error rate and priority. Using sidelink resources for such communication between mobile devices may reduce communication latency and reduce cell load. In some example, the source and destination base stations are stationary. In some example, the source and destination base stations are mobile. In some examples, the source and destination base stations are 5G gNBs or logical 5G radio nodes. In some other examples, the source and destination base stations are 4G eNBs. In some other examples, the source and destination base stations are infrastructure elements, such as roadside units. According to this disclosure, the specific and other mobile devices of the plurality are using the source sidelink while being located within the source cell. This has as a consequence that the specific and other mobile devices are synchronized with the signals transmitted by the source base station.

The method 100 comprises block 102 of receiving, at the source base station, an indication that the specific mobile device is moving from the coverage of the source cell to the coverage of the destination cell operated by a destination base station. Both the source cell and the destination cell are communication cells in a cellular radio network. The source cell may be a cell from which the specific mobile device departs, or may be a cell which the mobile device will pass through, coming from another cell. The destination cell may be a cell at which the specific mobile device will stop on arrival, or may be a cell which the mobile device will pass through, on its way to another cell. The wording "source" and "destination" is relative to the source cell and the destination cell, the mobile device moving from the source cell to the destination cell. In some examples, the source cell and destination cells may not be synchronized, i.e. they may not share a common time reference. The source base station and destination base station each have a coverage, the coverage of the source base station differing from the coverage of the destination base station. The coverage of the source base station and the coverage of the destination base station may overlap. The coverage of the source base station and the coverage of the destination base station may be disjoint. The specific mobile device is in movement from the source cell to the destination cell, such that the mobile device is moving from coverage of the source base station to coverage of the destination base station. When moving from the source cell to the destination cell, the specific mobile device may be in coverage of both the source base station and destination base station, or may be under coverage of neither the source base station nor the destination base station, or be under coverage of either the source base station or the destination base station. When moving from the source cell to the destination cell, the mobile device may pass through one or more intermediate cells, the coverage of such intermediate cells intersecting a trajectory of the mobile device between the source cell and destination cell. In such examples, the sidelink resources used under coverage of the intermediate cell should not enter in conflict with resources used by the intermediate cell. Such conflict may for example be avoided by informing the intermediate cell of the sidelink resources being used or by obtaining an agreement from the intermediate cell for the use of such sidelink resources. The indication that the specific mobile device is moving from the coverage of the source cell to the coverage of the destination cell operated by a destination base station may for example originate from the specific mobile device detecting a signal degradation with its serving station and/or a sufficient signal level in another cell (e.g. destination cell), in this case the source base station, using such signal degradation indication to trigger a switching from using the source sidelink resources to using the common sidelink special resources to send and/or exchange signals with one or more other mobile devices of the plurality, in order to avoid latency introduced for example by a switch from the source sidelink to a destination sidelink.

In some examples, the indication that the specific mobile device is moving from the coverage of the source cell to the coverage of the destination cell operated by a destination base station may originate from an application server. In some examples, the application server is provisioned with a status of the direct communication links of the specific mobile device, i.e. whether the direct communication link is based on specific sidelink resources. In some examples, the application server communicates with the specific mobile device through the source base station. In some examples, the application server communicates with all mobile devices from a plurality of mobile devices according to this disclosure. In some examples, the application server is taking into account a geographical location of the specific mobile device in order to generate the signal. Indeed, in some examples, the switching, by the specific mobile device, from the source sidelink resources to the common sidelink special resources to exchange signals with one or more other mobile devices from the plurality, comprises the specific mobile device or the source base station receiving a signal originating from an application server based on a geographical location of the specific mobile device. Basing the signal on geographical location permits proceeding with switching from the source sidelink resources to the common sidelink special resources when the specific mobile device is in a transition zone between the source and the destination base stations.

It should be noted that in the context of this disclosure, an exchange of information through sidelink resources may comprise sending and receiving information of data using different sidelink resources for the sending than for the receiving, or using the same resources for the sending and for the receiving.

In some examples, indication that the specific mobile device is moving from the coverage of the source cell to the coverage of the destination cell operated by a destination base station and will use common sidelink special resources instead of dedicated sidelink resources such as source or destination sidelink may comprise a signal indicating sidelink scheduling constraints. Indicating such constraints to the destination base station may prevent disruption of the sidelink communication between the specific mobile device, which may be a platoon leader, and another mobile device of the plurality, or may permit adapting the type of communications to the common sidelink special resources, for example by restricting the communication between mobile devices to transportation coordination between vehicles or by preventing or reducing use of the common sidelink special resources for transmission of media services for example. Such an indication may be transmitted from the source base station to the destination base station prior to handover of the specific mobile device, or may be transmitted by the specific mobile device to the destination base station directly during or after handover to the destination base station, or may be relayed to the destination base station by another mobile device in communication both with the specific mobile device via sidelink and with the destination base station.

The method 100 comprises block 103 of negotiating, by the source base station, common sidelink special resources with the destination base station, whereby the source and destination base stations have some common resources.

It should be understood that due to a sidelink being operated within the coverage of a given base station, such sidelink connecting different mobile devices will be synchronized to such given base station. As one of the mobile devices moves towards a different base station, a handover will take place which may submit the mobile device to different synchronizations being on one hand a synchronization with the given base station associated with the sidelink, and on the other hand a synchronization with the different base station. In a case of a mobile device unable to operate with different synchronizations, for example in the case of a mobile device comprising a single radio networking module, the mobile device should get disconnected from the sidelink in order to complete a handover to the different base station. Such disconnection from the sidelink will introduce latency in the communication between the different mobile devices. The present disclosure aims at resolving this issue. In some examples, the present disclosure aims at avoiding a specific mobile device switching directly from a source sidelink synchronized to a source base station to a destination sidelink synchronized to a destination base station which is not synchronized with the source base station.
- Even if the source and destination base stations are synchronized, the radio resources are operated independently in the different base stations. When two mobile devices under the same cell coverage are connected through a sidelink managed by the serving base station and when one of the two mobile device is handed-over to a destination cell operated by another base station, the sidelink is not designed to be managed by two different base stations at the same time and is therefore disconnected. The present disclosure aims at resolving this issue.

In order to resolve these issues, the example method 100 comprises such block 103 of negotiating, by the source base station, common sidelink special resources with the destination base station, whereby the source and destination base stations have some common resources. Using such common sidelink special resources thereby prevents a disconnection or latency between the mobile devices of the plurality. Avoiding latency between mobile devices may for example reduce a risk of collision in the case of such mobile devices being vehicles on a road or street, drones, or mobile robots in a factory. Avoiding latency may also permit operating the mobile devices at a higher speed, or having them follow each other more closely, in time or distance. An example of common sidelink special resources comprises sidelink resources which are both in a pool of resources signaled by the source base station and in a pool of resources signaled by the destination base station. In some examples, the common resources comprise a common part of a frequency spectrum and/or a common time interval. In an example, a set of transmission resource pools of the source base station are configured as reception resource pools at the destination base station and/or a set of reception resource pools of the source base station are configured as transmission resource pools at the destination base station. In an example, the special resources are known by or authorized to be used by a limited number of users (for example UEs moving from the coverage of source base station to the coverage of the destination base station). Since source and destination base station may not be synchronized, a time reference used while receiving or transmitting data using the common sidelink special resources may be different from the timing used by the source and/or destination base station. In such a case, the source or destination base station may take special measures to limit an interference with other users and ensure communication between users using the common sidelink special resources, such as setting guard time or frequency intervals, coordinating transmission and/or reception intervals of time while common sidelink special resources are used. The source or destination base station may also signal time differences and/or any other specific configuration at least to the concerned UEs or mobile devices.

Common sidelink special resources according to this disclosure are in some examples aimed at being used as a stable configuration. In particular, such common sidelink special resources are selected based on a negotiation and are in some examples not randomly selected in a pool but specifically chosen to be resources common to the source and destination base stations. While common sidelink special resources differ from dedicated sidelink resources such as source or destination sidelink resources, in some examples common sidelink special resources pertain to stable resource pools common to neighboring cells comprising the base and destination cells. Such common sidelink special resources are indeed aimed at being used to maintain a sidelink during a transition from one cell to another, the sidelink being normally maintained within a given cell using dedicated sidelink resources such as the source or destination sidelink resources.

The negotiating may take place through an exchange of signals directly between the source and the destination base stations. The negotiating may take place through an indirect exchange of signals between the source and destination base station, for example through an intermediate network entity such as a third base station, a remote server or a multi access edge computing entity. The negotiating may take place periodically or may take place when triggered by the receiving, at the source base station, of the indication that the specific mobile device is moving from the coverage of the source cell to the coverage of the destination cell operated by a destination base station. The negotiating may alternatively take place independently of the receiving, at the source base station, the indication that the specific mobile device is moving from the coverage of the source cell to the coverage of the destination cell operated by a destination base station. The negotiating may take place centrally between a plurality of neighbor base station. The negotiating may take place between specific pairs of base station. Different negotiating processes may be used between base station pertaining to a same PLMN compared to negotiating processes between base station pertaining to a different PLMN.

The negotiating results in identifying one or more common sidelink special resources because the source and destination base stations have some common resources according to this disclosure. When more than one such common sidelink special resources are identified, a choice may be made based on different elements. Element may comprise service Quality of Service requirements such as throughput, delay, packet error rate and priority.

In some examples, the negotiating comprises exchanging between the source and the destination base station one or more of the following information:
- frequency domain resources information;
- time domain resources information;
- common sidelink special resources information;
- geographical limitation information;
- information related to the plurality of mobile devices;
- information related to communication traffic between mobile devices belonging to the plurality of mobile devices;
- time synchronization difference information; or
- frequency synchronization difference information.

The exchange of such information may take place one way or both ways between the source and the destination base station. In some examples, the destination base station provides some or all of this information to the source base station, so the source base station may proceed with determining if common sidelink special resources are indeed available. In some examples, the source base station provides some or all of this information to the destination base station, so the destination base station may proceed with determining if common sidelink special resources are indeed available. Such providing of information may take place directly between base stations, or through intermediate networking entities, for example a mobile device in coverage of both base station, or an alternative networking entity connected to both base stations through the network.

The method 100 comprises block 104 of reconfiguring, by the source base station, at least the sidelink resources provided to the specific mobile device from the source sidelink resources to the common sidelink special resources. Such reconfiguration places the specific mobile device in a position to reliably communicate using such common sidelink special resources both under coverage of the source base station and under coverage of the destination base station, thereby avoiding or reducing a communication disruption which could take place due to the coverage change.

The method 100 also comprises block 105 of triggering, by the source base station, a handover of the specific mobile device from the source base station to the destination base station. In some cases, such triggering takes place following the reconfiguring according to block 104. In some cases, the triggering takes place prior to the reconfiguring according to block 104. The triggering may be time bound, for example by use of a counter linked to the indication according to block 101, or may be bound to an action taking place, such as the identification of common sidelink special resources for example.

Figure 2 illustrates another example method 200. Such example method 200 comprises blocks 101 to 105 as per example method 100. Example method 200 further comprises, in block 201, the source base station identifying the destination base station following the receiving of the indication that the specific mobile device is moving from the source cell to the destination cell, whereby the destination cell is identified as pertaining to a public land mobile network, PLMN, differing from a source base station PLMN, the method further comprising receiving at the source base station and from the specific mobile device, measurements performed on the destination base station. Block 201 and 101 may or may not overlap in time, for example depending on the location of the specific mobile device. In such example, the specific mobile device may be used as an intermediate source of information between the source base station and the destination base station.

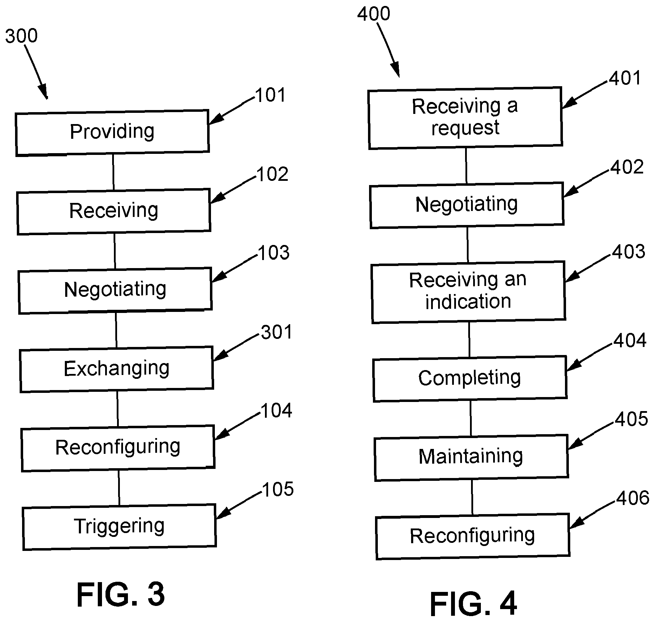

Figure 3 illustrates another example method 300. Such example method 300 comprises blocks 101 to 105 as per example methods 100 or 200. Example method 300 further comprises, in block 301, the source base station exchanging data with a multi-access edge computing node, MEC node, whereby the MEC node is monitoring sidelink packet traffic with a network exposure function, NEF, and whereby the MEC node adjusts an error protection process in function of the monitoring. Block 301 and 104 may or may not overlap in time, for example depending on the location of the specific mobile device. In some examples, the MEC may for example increase error protection when the source sidelink resources used by the specific mobile device are the common sidelink special resources, due to such common sidelink special resources offering a communication quality and/or a maximum throughput poorer than a communication offered by either one of a source sidelink or destination sidelink, this being due to the common sidelink special resources being meant as transitional resources. In another example (not represented), a method includes blocks 101 to 105 as well as both blocks 201 and 301.

While Figures 1 to 3 illustrate examples of a method according to this disclosure from a source base station point of view, Figure 4 illustrates an example method 400 according to this disclosure from a destination base station point of view.

Method 400 is an example method for providing sidelink resources to a plurality of vehicles comprising a specific mobile device moving from the coverage of a source cell operated by a source base station to the coverage of a destination cell operated by a destination base station.

Method 400 comprises, in block 401, receiving, at the destination base station and from the source base station, a request to negotiate common sidelink special resources with the source base station, whereby the source and destination base stations have some common resources. Such a request may be transmitted directly from the source base station to the destination base station, or may be transmitted indirectly by another entity in a network with which both the source and base stations may communicate. In some cases, such a request may be received in response to receiving, at the source base station, an indication that the specific mobile device is moving from the coverage of the source cell to the coverage of the destination cell operated by a destination base station such as in block 102 of Figures 1-3. In some cases, such request is received independently of the receiving, at the source base station, an indication that the specific mobile device is moving from the coverage of the source cell to the coverage of the destination cell operated by a destination base station, such request being for example received in prevision of or in preparation for movement of one or more unidentified specific mobile devices at some future point.

Method 400 comprises, in block 402, negotiating, by the destination base station, the common sidelink special resources with the source base station. Such negotiation may for example take place as described in block 103 of Figures 1 to 3. The negotiation itself may be handled by one or more of the source base station, the destination base station, or another network entity, for example based on relevant data transmitted by one or more of the source base station, the destination base station, or another network entity.

Method 400 comprises, in block 403, receiving, at the destination base station, an indication that the specific mobile device is moving from the coverage of the source cell to the coverage of the destination cell, the specific mobile device operating the common sidelink special resources. The receiving of such an indication may trigger in some example a handover of the specific mobile device from the source base station to the destination base station or an access procedure of the specific mobile device to the destination base station.

Method 400 also comprises, in block 404, completing a handover of the specific mobile device from the source base station to the destination base station. In some examples, this handover takes place at a time when the specific mobile device is using the common sidelink special resources, and is therefore in a position to reliably communicate with other mobile devices.

Method 400 also comprises, in block 405, maintaining, by the destination base station, the common sidelink special resources operated by the specific mobile device, until a destination reconfiguration event occurs.

The use of common sidelink special resources as per the present disclosure is not meant as a permanent communication link but as a transitional communication link. Indeed, as illustrated in block 406 of Figure 4, example method 400 also comprises reconfiguring, by the destination base station, at least the sidelink resources provided to the specific mobile device from the common sidelink special resources to destination sidelink resources. Such reconfiguring to using destination sidelink resources may take place when the specific device is located within the destination cell permits and permits handling the movement from one cell to another using the common sidelink special resources while relying on the source or destination sidelinks when the mobile devices are in the respective source or destination cell. One should however note that in some examples, the mobile devices may pass through an intermediate cell between the source and destination cells while maintaining the use of the common sidelink special resources in order to avoid unnecessary transitions. In some examples, the use of common sidelink special resources remains in place between the specific mobile device and other mobile device of the plurality for less than 10 seconds. In some examples, the use of common sidelink special resources remains in place between the specific mobile device and other mobile device of the plurality for less than 5 seconds.

One should note that the destination sidelink resources, destination cell and destination base station may have the same characteristics as the source sidelink resources, source cell or source base station. The destination sidelink resources, destination cell and destination base station may also have different characteristics from either one of the source sidelink resources, source cell or source base station.

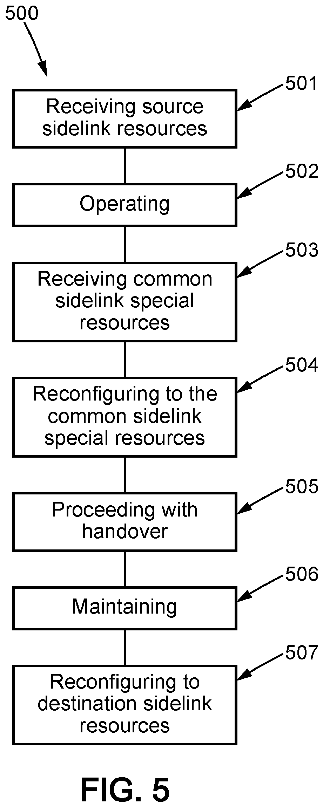

Figure 5 illustrates an example method 500 according to this disclosure from a specific mobile device point of view. In this example, the specific mobile device moves from a source base station coverage to a destination base station coverage, and communicates with other mobile devices using sidelink resources, whereby the sidelink resources are in a first phase source sidelink resources managed or exclusively managed by the source base station, whereby the sidelink resources are in a second phase following the first phase sidelink resources negotiated between the source and destination base stations, and whereby the sidelink resources are in a third phase following the second phase sidelink resources managed or exclusively managed by the destination base station, such succession of phases aiming at reducing or avoiding communication disruptions of sidelink communications between mobile devices as they move from one base station coverage to another.

Example method 500 is an example method for providing sidelink resources to a plurality of mobile devices comprising a specific mobile device moving from the coverage of a source cell operated by a source base station to the coverage of a destination cell operated by a destination base station.

The mobile devices of the plurality may in some examples follow each other. The specific mobile device may communicate with a preceding mobile device. The specific mobile device may communicate with a following mobile device.

In some examples, the specific mobile device is one of a plurality of mobile devices forming a platoon, whereby a method according to this disclosure is applied successively to different mobile devices as such different mobile devices follow each other as the platoon moves from the source cell to the destination cell. The following mobile device according to this disclosure may thereby be considered as a "specific mobile device" in relationship with a further following mobile device. A platoon may be formed of a plurality of autonomous connected vehicles. A platoon may comprise more than 5 vehicles. A platoon may comprise more than 10 vehicles. Mobile devices forming a platoon may span more than two cells. Using the method according to this disclosure may permit increasing an overall speed of displacement of the platoon compared to using other communication solutions which would introduce additional latency due to using a different method to transition a mobile device from a source cell to a destination cell.

Example method 500 comprises a block 501 of receiving, from the source base station and at the specific mobile device, source sidelink resources. Such source sidelink resources may be radio resources allocated dynamically by the source base station ('mode 1'), or resources to be taken autonomously by a user equipment (UE) corresponding to a respective mobile device from a pool of resources which may be signaled by the source base station or pre-configured in the UEs ('mode 2').

Example method 500 comprises a block 502 of operating, by the specific mobile device, the source sidelink resources to exchange data with at least one other mobile devices comprised in the plurality of mobile devices. Such data may for example permit operating the mobile devices connected by the source sidelink as a platoon, such mobile devices moving in a synchronized manner while communicating among each other using the sidelink, thereby reducing traffic involving the source base station.

Example method 500 comprises, in block 503, following an indication that the specific mobile device is moving from the source cell to the destination cell, receiving from the source base station common sidelink special resources negotiated between the source base station and the destination base station, whereby the source and destination base stations have some common resources. The indication may for example correspond to the indication discussed in block 102 of Figures 1 to 3. The common sidelink special resources may for example correspond to the common sidelink special resources as negotiated in blocks 103 of Figures 1-3 or block 402 of Figure 4. Such receiving permits in some example preparing a reconfiguration to using such common sidelink special resources.

Example method 500 comprises, in block 504, reconfiguring, by the specific mobile device, at least the sidelink resources from the source sidelink resources to the common sidelink special resources to exchange data with the at least one other mobile devices comprised in the plurality of mobile devices

In some examples, such reconfiguring as per block 504, by the specific mobile device, from using the source sidelink to using the common sidelink special resources to exchange signals with the another mobile device, comprises the specific mobile device sending a reconfiguration message to the other mobile device (for example a following mobile device). The reconfiguring may comprise exchanging several different messages between different elements participating in the process. The specific mobile device may be sending the reconfiguring message to at least a following mobile device using the source sidelink. Such reconfiguring message may comprise configuration information for using the common sidelink special resources, for example indicating common sidelink special resources, or indicating a specific configuration selection number or code corresponding to such common sidelink special resources.

Block 504 may for example take place as a device moves out of the source cell and into the destination cell. Block 504 permits avoiding break or latency in the communication between a preceding and specific mobile device or vehicle as the preceding vehicle or mobile device moves out of the source cell. A specific mobile device may, at some point in time, communicate both using the common sidelink special resources with one preceding or following mobile device, and with other sidelink resources such as source or destination sidelink resources with the other one of the preceding or following mobile device, and do so for example by having the specific mobile device indicate corresponding scheduling constraints to its serving base station, whereby the serving base station would be the source base station if the sidelink resource used is the source sidelink resource, or the destination base station if the sidelink resource used is the destination sidelink resource. The specific mobile device may indicate corresponding scheduling constraints to its serving base station in other situations also.

In some examples, the reconfiguring as per block 504 is triggered by the specific mobile device receiving a handover command originating from the source base station. Such handover command may be a handover command to switch from the source cell operated by the source base station to the destination cell operated by the destination base station.

In some examples, the reconfiguring as per block 504 comprises the specific mobile device receiving a reconfiguring command originating from the source base station. The reconfiguring command originating from the source base station may comprise configuration information for the common sidelink special resources, for example indicating common sidelink special resources, or indicating a specific configuration selection number or code corresponding to the common sidelink special resources.

In some examples, the reconfiguring as per block 504 is preceded by a common sidelink preparation step, the common sidelink preparation step comprising sending a common sidelink preparation message from the specific mobile device to another mobile device, the common sidelink preparation message comprising common sidelink configuration information related to the common sidelink special resources. Proceeding with such preparation step may participate in reducing communication disruptions.

In some examples, the specific mobile device periodically proceeds with checking the availability of a common sidelink special resources. Proceeding with such periodical check may participate in reducing communication disruptions by permitting that the specific mobile device update common sidelink special resources as it travels. Such a periodical check may take place at least once per minute. Such a periodical check may take place at least once every 10 seconds.

Example method 500 comprises, in block 505, following the reconfiguration of the sidelink resources from the source sidelink resources to the common sidelink special resources, proceeding, at the specific mobile device, with a handover from the source base station to the destination base station. This permits proceeding with the handover while avoiding or reducing communication disruptions in the transition from the source to the destination cell by use of the common sidelink special resources.

Example method 500 comprises, in block 506, maintaining, at the specific mobile device, the common sidelink special resources, until a destination reconfiguration event occurs. This may ensure that the use of common sidelink special resources is maintained for sufficient time to avoid sidelink communication disruption, for example until other mobile devices in sidelink communication with the specific mobile devices are under coverage of the destination cell, thereby permitting reliable use of destination sidelink resources.

In some cases, the destination reconfiguration event comprises one or more of:
- the expiration of a timer;
- the detection of the presence of some or all mobile devices pertaining to the plurality of mobile devices in the destination cell.
Such example destination events may for example, in the case of a timer, avoid that a specific mobile device remains indefinitely in a state using common sidelink special resources. Such example destination events may for example, in the case of detection of the presence of some or all mobile devices pertaining to the plurality of mobile devices in the destination cell, permit maintaining the use of common sidelink special resources until some or all members of a platoon have rejoined the destination cell, thereby reducing risks of miscommunication when switching to using destination sidelink resources. Both elements may be combined, for example by designing an event which would be the earliest of the expiration of a timer or of the detection of the presence of some or all mobile devices pertaining to the plurality of mobile devices in the destination cell. Numerous other options may be available for defining such an event, such as the detection of the presence of more than half of mobile devices and/or the presence of a specific mobile device pertaining to the plurality of mobile devices in the destination cell, for example.

Example method 500 comprises, in block 507, reconfiguring, at the specific mobile device, at least the sidelink resources from the common sidelink special resources to destination sidelink resources provided by the destination base station. In this example, such a reconfiguring would finalize the transition from the source to the destination cell, and permit use by the specific mobile device of destination sidelink resources which may for example offer a higher bandwidth than the common sidelink special resources. The source and destination sidelink may indeed offer higher bandwidth than the common sidelink special resources, due to the common sidelink special resources being aimed at being of transitional use in nature. In some examples, scheduling constraints related to the common sidelink special resources are more constraining than scheduling constraints related to the source or destination sideling resources.

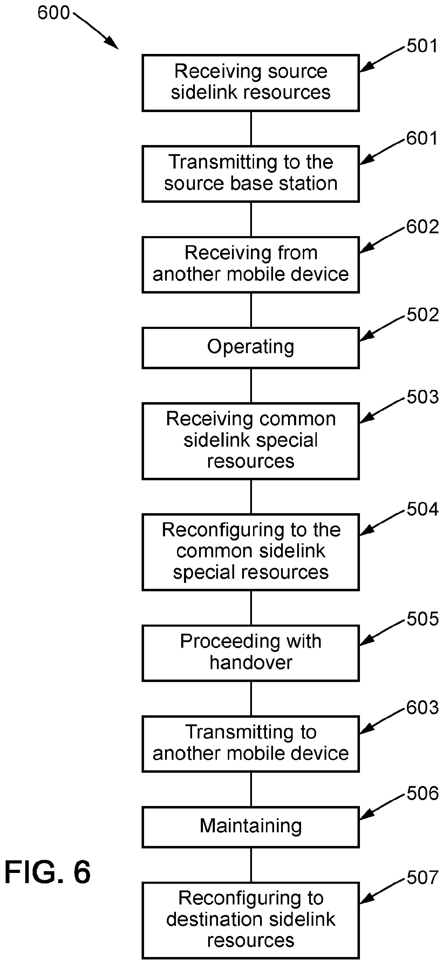

Figure 6 illustrates another example method 600. Such example method 600 comprises blocks 501 to 507 as per example method 500. Example method 600 further comprises, in block 601, transmitting, by the specific mobile device and to the source base station one or more of:
- specific mobile device location information;
- a specific mobile device status as member of the plurality of mobile devices;
- an identifier of the plurality of mobile devices;
- information from a radio network information service, RNIS;
- a situation update, the situation update comprising one or more of a report from another mobile device comprised in the plurality of mobile devices;
- sidelink traffic information.

Such transmitting as per block 601 may for example permit having the source base station taking transmitted information into account to pick a specific set of common sidelink special resources over another. Various available common sidelink special resources may indeed have different location based characteristics, in which case taking a specific mobile device location information into account may permit a location based choice of common sidelink special resources. Various available common sidelink special resources may indeed have different scheduling constraint characteristics, in which case taking a specific mobile device status as member of the plurality of mobile devices into account may permit for example assigning common sidelink special resources offering lesser scheduling constraints than another to a specific mobile device having a status of platoon leader. Various available common sidelink special resources may indeed have different available bandwidth characteristics, in which case taking an identifier of the plurality of mobile devices into account may permit for example assigning common sidelink special resources offering higher bandwidth than another to a platoon or plurality of vehicles comprising a relatively higher number of mobile devices.

Example method 600 also comprises block 602, whereby the specific mobile device is receiving, using the source sidelink resources, from another mobile device comprised in the plurality of mobile devices, one or more of:
- signal measurement information;
- sidelink traffic information.

Receiving such signal measurement information may for example permit getting prepared for a handover, for example if the another mobile device is a preceding mobile device. In such a case, a preceding mobile device may for example observe a degradation of signals received from the source base station and communicate such degradation to the specific mobile device. A similar reasoning applies to sidelink traffic information.

Example method 600 also comprises block 603, whereby the proceeding, at the specific mobile device, with a handover from the source base station to the destination base station further comprises the specific mobile device transmitting through the common sidelink special resources handover information and/or handover command to another mobile device comprised in the plurality of mobile devices. This for example may happen when the specific mobile device has a status of leader of a platoon comprising the other mobile device. This permits reducing traffic with base stations.

One should note that the actions related to blocks 601, 602 or 603 may or may not pertain to a same method, such actions being in some cases taken independently from each other.

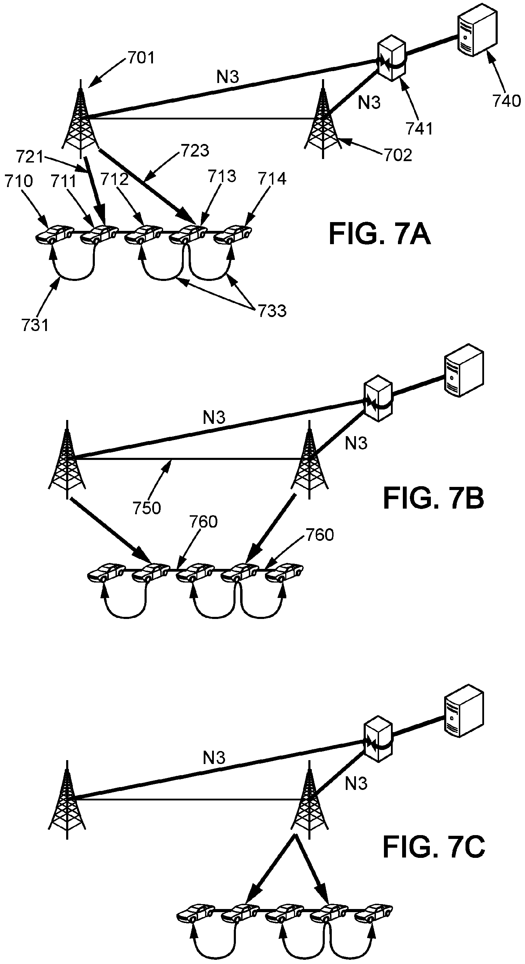

Figures 7A-C a source base station 701, a destination base station 702, and mobile devices 710-714 in three different phases of applying example methods according to this description. Where appropriate, the reference numerals are not repeated in Figures 7A-C to gain readability.

In the following sections of the description, examples of operation of the methods according to this description are considered. The vocabulary used may reflect an application in a specific example field. In some examples, the source base station is corresponding to a source gNB, i.e. a logical 5G radio node. In some examples, the destination base station is a target base station or target gNB. In some examples, the mobile devices are vehicles, or UE, or platoon members. In some examples, the plurality of vehicles comprises one or more platoons.

In figure 7A, the plurality of mobile devices 710-714 are vehicles such as cars or vehicles forming a platoon. Such vehicles may in this example communicate using a vehicular to everything (V2X) system, for example a NR (new radio) V2X system. Some vehicles in the platoon, specifically vehicles 711 and 713 in this example, are connected to the source base station 701 over respective radio Uu interfaces 721 and 723. Vehicles 711 and 713 are in RRC ((Radio Resource Control) connected state. Vehicles 710, 712 and 714 are RRC idle members connected to another vehicle using source sidelink resources, or more generally vehicles not communicating with the gNB 701 via Uu link for the needs of sidelink communication. Vehicle 710 is connected to vehicle 711 via sidelink communication illustrated by 731. Vehicles 712 and 714 are each connected to vehicle 713 via sidelink communication illustrated by 733. In some cases, vehicle 713 is a platoon leader for a platoon formed of vehicles 712, 713 and 714. The leadership role of vehicle 713 is illustrated by sidelink communication 733. In some cases, vehicle 711 is a platoon leader for a platoon formed of vehicles 711 and 710. The leadership role of vehicle 711 is illustrated by sidelink communication 731. In some cases, all vehicles 710-714 form a single platoon, for example comprising a leader 713 and a subleader 711, all vehicles sharing sidelink resources illustrated by link 760. In other cases, there is no leadership role assigned to any of the vehicles, or it is assigned to a vehicle not represented in Figure 7. The sidelink resources 760 correspond in Figure 7A to the source sidelink resources, in Figure 7B to the common sidelink special resources, and in Figure 7C to the destination sidelink resources, and illustrate how sidelink is maintained through handover of the mobile devices 710-714 from the source base station 701 to the destination base station 702.

Different resource allocation schemes or resource allocation modes may be used to establish a sidelink.

The platoon or plurality of mobile devices may be under coverage or under partial coverage of the source gNB or source base station 701, which controls the resources allocated to the source sidelink communication. With a currently defined NR resource allocation scheme, source sidelink resource allocation may for example take place under a mode 2 (for example more particularly under mode 2d) and possibly under a mode 1.

If platoon members, or mobile devices pertaining to the plurality of mobile devices, are configured to use an NR mode 1 as resource allocation mode, a NR Uu may assign NR SL (sidelink) resources for the cases of (i) a licensed carrier shared between NR Uu and NR SL; and (ii) a carrier dedicated to NR SL. The following techniques may be supported for resource allocation Mode 1: Dynamic resource allocation and Configured grant Type 1 and Type 2. In this case, the source gNB 701 individually assigns resources to each member of the platoon. The source gNB may be aware of which individual UEs, or mobile devices, are members of a platoon. Each platoon member may be RRC connected over a Uu link (in Figures 7A-C, only 711 and 713 are illustrated as RRC connected over a Uu link, but other configurations (not illustrated here) may be considered where for example all members of a platoon are RRC connected over a Uu link to their serving base station, the serving base station being the source base station when camping in the source cell, and the destination base station when camping in the destination cell).

If platoon members, or mobile devices pertaining to the plurality of mobile devices, are configured to use NR mode 2 (or for example more particularly mode 2d) as resource allocation mode, then, in the context of group-based SL communications, a UE such as 713 may inform its serving gNB (in this case the source base station 701) about members UE-B (mobile device 712 for example), UE-C (mobile 714 for example), and so on of a plurality (additional such members are not illustrated here), and for the serving gNB to provide individual resource pool configurations and/or individual resource configurations to each group member through the UE-A which acts as a leader, receiving the relevant sidelink resources configuration data from the source base station via its direct connection with the source base station, and forwarding such information to other vehicles via source sidelink communication. In this example, UE-A does not modify the configurations, and there is no direct connection required between any other member UE such as 712 and 714 and the source gNB. Higher-layer signaling may be used to provide the configurations. Such functionality may be up to UE capability. In this case, at least one platoon member (UE-A corresponding for example to mobile device 713) is in RRC connected state over Uu link 723 with the source base station 701.

In possible NR releases, resource allocation enhancements may allow alternative resource allocation modes. For example, a UE may schedule other UEs, for example platoon member UE-A may provide an individual sidelink resource configuration to platoon members UE-B, UE-C and so on. Resources may be part of a group of resources for which UE-A was assigned as scheduling UE by its serving gNB. UE-A may for example be elected as platoon manager or platoon leader. In this case, one platoon member (UE-A) may be in RRC connected state over Uu link.

As the vehicles 710-714 progressively move away from the coverage of source base station or source gNB 701, source gNB 701 acquires knowledge that at least a platoon member, for example vehicle 713, heads out of coverage of the source gNB 701 and into coverage of a target or destination gNB 702, which is an example destination base station as per the methods hereby described. A process allowing the source gNB to acquire this knowledge may depend on the resource allocation scheme utilized for handling sidelink communication within the platoon.

Under a first example resource allocation scheme (not illustrated here), all platoon members are in RRC connected mode over Uu link with the source base station and, according to NR procedures, periodically report to the source gNB they camp on (here, the source base station) measurements (e.g. Received signal Received Power, RSRP, or Received Signal Received Quality, RSRQ) of the link quality on the current and on neighboring cells (including for example a destination cell). In order to correctly schedule sidelink resources for platoon operation, and also in order to accomplish the current methods, source gNB may acquire knowledge of the UE status as a platoon member. Platooning may be handled by an application layer and a radio access technology network (RAN), including the gNB, may not necessarily be aware of the platoon configuration. The UE (or specific mobile device) has knowledge of its status as a platoon member and of the platoon identity. In some cases, acquiring knowledge, by the source base station, that at least a platoon member heads out of coverage of the source gNB may include a step where a UE or mobile device concerned reports to the source gNB information about its status as a platoon member and information of the platoon identity. Thus, the source gNB is in a position to correctly identify platoon members heading towards the coverage area of another gNB, for example the destination base station, and take measures to preserve the sidelink communication during a handover process as per the methods hereby described.

A multi- access edge computing, MEC node 740 may be used in the process of acquiring knowledge, by the source base station, that at least a platoon member, heads out of coverage of the source gNB. The MEC may in some cases be connected to both base stations 701 and 702 through point to point interaction N3 through a User Plane Function UPF 741. The MEC 740 may use a location application program interface (API) to detect an event of handover of a platoon UE, such as mobile device 713 for example, from the source gNB 701 to the target or destination gNB 702. In some cases, the platoon members may be registered into a multicast group in the MEC node 470. Each platoon UE 710-714 may report its new location, i.e. target gNB, to a location server of the MEC node, when RSRP/RSRQ measurements are above a threshold. Such RSRP/RSRQ threshold may be fixed or changed depending on the traffic over the sidelink between the platoon UEs. In this manner, signaling due to reporting a position may be reduced or regulated (such signaling being limited to the application of the threshold).

In some cases, a UE or mobile device may report to a gNB information about its status as a platoon member and information of the platoon identity conditionally, or when under certain conditions are met, for example when a RSRP of neighboring cell is stronger than a RSRP of a current cell. Thus, overall signaling would be reduced or regulated.

Under a second example resource allocation scheme, while some platoon members may be in RRC connected state over Uu link and may directly provide information to their serving base station as described above according to the first example resource allocation scheme, other platoon members in RRC idle state over Uu link (such as mobile devices 710, 712 and 714) may inform a RRC connected UE (for example, mobile devices 711 or 713) over the sidelink of the change of situation for the member in RRC idle state, such change of situation including for example one or more of:
- RSRP of the neighboring cell higher than RSRP of current cell by a predefined threshold; and/or
- RSRP of current cell under a predefined threshold; and/or
- QoS (quality of Service) drop over sidelink due to interference from target cell over current resources used)
The informed RRC connected UE (or another RRC connected UE in the platoon) may thereby inform the source gNB of the change of situation based on one or more of:
- Report from the UE or member in RRC idle state; and/or
- Concurring reports from several UEs or members in RRC idle state; and/or
- The own measurement of the RRC connected UE; and/or
- Information from a radio network information service (RNIS) located in the MEC node and that is accessed through a radio information API, whereby the RNIS may transmit either measurement status of the nodes or QoS situation in
the network such as a radio access bearer (RAB) status of the platoon members. The member in RRC idle state may set a timer and wait for sidelink reconfiguration from the informed RRC connected UE (or from another RRC connected UE in the platoon) prior to proceeding with cell-reselection. In some cases, if such a timer expires and no reconfiguration instruction is received and sidelink QoS is below a given threshold (e.g. configured or pre-configured), member in RRC idle state may report a platoon handover failure.

Under a third example resource allocation scheme, the situation is similar to the second example resource allocation scheme above, with the exception that all platoon members, regardless of their RRC connection state over Uu link with the source base station, report situation changes to a platoon manager or platoon leader. The platoon manager or platoon leader may update the information in location services and in a RNIS located in a MEC node connected to the source or target (i.e. destination) gNB. The information transmitted by the platoon manager is either its own information (measurement status, attached gNB, QoS status, etc.) or information for other UEs of the platoon.

In some examples, the source gNB acquires knowledge of the sidelink traffic between platoon members. In some cases, at least one UE or mobile device informs the source gNB about the priority of the sidelink packet traffic. Packet priority may be set by an application layer connected to the UE. In LTE for example, a 3-bit priority field may be included in SCI format 1 (sidelink control information) sent on a PSCCH (physical sidelink control channel) used to indicate the resource allocation used for data transmission on an associated PSSCH (physical sidelink shared channel). In NR, a similar mechanism may be defined. In the view of negotiating common sidelink special resources with the destination base station and initiating a platoon handover, it may in some cases be useful for the source base station to have information about the amount of current sidelink priority traffic (and possibly about a minimum amount of priority traffic required in some cases over a sidelink). Packet priority and/or other relevant information about the traffic of application packets and/or session parameters may be transmitted to the source gNB by a traffic control node located in the MEC node, and may be based on the knowledge of the position of a platoon member obtained from a location application. In some cases, a mobile device or UE in Uu link RRC connected mode reports sidelink traffic information (volume, priority) to the source gNB upon detection of the change of coverage situation, and/or upon request by the source gNB, triggered by reports of a same or of a different UE in the same platoon. In some cases, before such reporting, the UE may acquire information on the sidelink traffic from other UEs (e.g. by requesting buffer status reports of neighboring UEs, or by relaying information from other UEs in the same platoon).

As represented in Figures 7A-C by the connection 750, source gNB (i.e. source base station) 701 negotiates common sidelink special resources with target gNB (i.e. destination base station 701). While represented as a direct connection 750, such connection may be indirect through a network, and may not be a permanent connection.

In some examples, when source gNB (i.e. source base station 701) negotiates common sidelink special resources with target gNB (i.e. destination base station 702), the negotiation comprises target gNB 702 being identified by source gNB 701 among neighboring gNBs based on the source base station having acquired knowledge that at least a platoon member, for example vehicle 713, heads out of coverage of the source gNB 701 and into coverage of a target or destination gNB 702 as described above. If the target gNB 702 is member of a different public land mobile network (PLMN) than the source gNB 701, the UE or specific mobile device is configured to perform measurements on the target gNB 702 by the network or by the MEC node 740 connected to the source gNB 701 and to the target gNB 702.

Source and target base stations may operate along the same or different frequencies, and may or may not be synchronized. The current methods relate to cases where common resources may be found between both base stations, for example in a common part of the spectrum of a licensed carrier shared between NR Uu and NR SL handled by the source destination base stations, or in a carrier dedicated to NR SL where at least a part of resources may be jointly handled by source and destination base station. When such resources do not exist, alternative solutions may be considered which may not involve common sidelink special resources as hereby described. Information exchanged between source and destination base stations in view of the negotiation may include one or several of the following elements, or may be pre-configured:
- Amount of frequency-domain resources; and/or
- Amount of time-domain resources; and/or
- Lapse of time (e.g. timer) during which the common sidelink special resources may be used; and/or
- Geographically limited restrictions (e.g. common sidelink special resources may be used conditionally on UE or mobile device location); and/or
- Time/frequency difference of common resources with respect to the synchronization provided by the source/destination base station.
In some cases, information related to a platoon (one or more of platoon identity, platoon members, platoon traffic, platoon UE contexts, etc.) may also be transferred between source and destination base stations, either as a part of a resource negotiation procedure, or as an enhancement of a handover procedure. When common sidelink special resources are fully preconfigured, negotiation may include approval/rejection of using common sidelink special resources. Common sidelink special resources may or may not comprise exceptional resources of the source or destination base station. Exceptional resources may however not guarantee that traffic with high priority may take place, since such exceptional resources may be rather limited and not collision free. In some cases, exceptional resources are distinct from resources available as regular sidelink resources such as source or destination sidelink resources.

When the negotiation is completed, the source gNB 701 may in some cases proceed with reconfiguration of platoon sidelink communication onto common sidelink resources. The source gNB may apply a resource allocation scheme as described above, to reconfigure sidelink communication for platoon members under its coverage, either directly for Uu link RRC connected members such as mobile devices 711 and 713, or indirectly (through a scheduling UE or mobile device) for RRC idle members such as 710, 712 and 714 and/or for platoon members under the responsibility of a platoon manager or platoon leader. Information related to time/frequency difference of common sidelink special resources with respect to the synchronization provided by the source gNB and/or geographical limitations and/or any other information may be included as part of the resource allocation process.

In some examples, in order to accelerate handover procedure towards the destination base station, information related to that destination base station may be transferred as part of the resource allocation process. Such information may include resource pool configuration, time/frequency synchronization offset with respect a current synchronization and/or to configured common resources.

In some cases, an application layer is informed about temporary degradation of sidelink quality of service. An MEC node or any other application function may periodically monitor the status of application packets traffic in the network through a network exposure function (NEF). In some cases, if the MEC node detects a change in the state of a platoon member and/or a drop in the quality of the reception of the application packets on the sidelink or is informed by an access network (AF) or by the NEF of an expected temporary degradation of sidelink quality, the following may take place:
- The MEC node may increase error protection over the application packets for example by adjusting the parameters of an erasure correcting code that is applied at the traffic control node in the MEC; and/or
- The MEC node may increase error protection over the application packets for example by reducing the stream throughput or buffering packets in order to improve the quality of the reception of the application packets; and/or
- The MEC node may configure common resources between the source base station and destination base station in order to transmit critical sidelink information during the handover. The destination base station may be configured to buffer the packet of other user terminals in the cell.

Figure 7B illustrates a situation where the common sidelink special resources may be used while one specific mobile device 713 has been handed over to the destination base station 702, while another specific mobile device 711 remains under coverage of the source base station 701.

Indeed, the source base station may trigger the handover procedure (and/or cell reselection) of one or several platoon members or mobile devices. For UEs (i.e. platoon members, or mobile devices) in RRC connected state over Uu link such as 711 and 713, a handover command may be issued by the source base station 701. The handover command may be direct, or differed to a later time. For example, a conditional handover command may be issued, and UEs will perform handover of Uu link when a certain condition is met. For example, a UE may perform the handover when a link quality onto the target cell exceeds a certain threshold. In another example, a UE may perform handover when a timer expires. Different UEs may be set with different timers, so as to avoid concomitant access request from multiple UEs onto the destination base station

UEs in RRC connected mode over Uu link may schedule other UEs (possibly in RRC idle mode over Uu link) and may forward information on the handover command to the UEs which they schedule. In some cases, a platoon manager is configured with (or uses a default value for) a timer during which it continues to schedule other UEs to use common sidelink special resources in the absence of an explicit handover grant by the destination base station.

In some cases, for UEs not in RRC connected state over Uu link and which may get their resource allocation indirectly through another UE (such UE relaying the source base station configuration in mode 2d for example, or via a platoon manager for example) the cell reselection process or handover to the destination base station may follow an indication forwarded by a scheduling UE or platoon leader.

In some cases, the destination base station acquires information on platoon members and/or information on the platoon, including one or more of identity, members, traffic or UE contexts which may be also transferred between the source base station and the destination base station, either as a part of a resource negotiation procedure, or as an enhancement of a handover procedure.

In some cases, the destination base station acquires knowledge of the presence of platoon members under its coverage area. For UEs in RRC connected state (713 for example), the destination base station 702 acquires knowledge of their presence under its coverage area when the UEs require access at the cell as per a regular procedure. Scheduling handover of other UEs such as 712 or 714 may take place by the scheduling UE 713 informing the destination base station about the identity of such scheduled UEs when such scheduling UE accesses the destination base station.

As illustrated in Figure 7C, the destination base station 702 reconfigures platoon sidelink communication onto destination sidelink resources. Destination base station 702 may reconfigure the platoon sidelink communication onto destination sidelink resources following a desired allocation scheme such as resource allocation schemes or modes hereby described. Such reconfiguration may take place, for example, once some, all or a specific platoon members are detected as under target gNB (i.e. destination base station) coverage. Such reconfiguration may take place, for example, once a timer expires (such timer may for example be a negotiated timer, a default timer, or a timer set once a first platoon member requests access to target gNB) even if not all members of a platoon have reached coverage of the target gNB.

In some cases, an application layer is informed about restauration of a regular sidelink communication with regular quality of service, such as using destination sidelink resources. The MEC node or any other application function may periodically monitor the status of application packets traffic in a network through a network exposure function (NEF). In some cases, if the MEC node detects a change in the state of the platoon member and/or a drop in the quality of the reception of the application packets on the sidelink or is informed by an access network (AF) or by the NEF of an expected temporary degradation of sidelink quality, the following options are possible and may be combined:
- the MEC node adjusts error protection over the application packets to nominal parameter value. This may for example be done by adjusting parameters of an erasure correcting code applied at a traffic control node in the MEC.
- the MEC node adjust error protection over the application packets for example by increasing the stream throughput or buffering the packets in order to improve the quality of the reception of the application packets
- the MEC node configures common resources between the source base station and destination base station in order to transmit the sidelink packets during handover.

Either one of base station 701 or 702, or either one of mobile devices 710-714 may comprise a processor, a memory and a networking module, the processor being configured to operate according to any of the methods hereby described. In some examples of mobile devices, the networking module is a single radio networking module. The processor may comprise electronic circuits for computation managed by an operating system.

Either one of base station 701 or 702, or either one of mobile devices 710-714 may comprise a non-transitory machine-readable or computer readable storage medium, such as, for example, a memory or storage unit, whereby the non-transitory machine-readable storage medium is encoded with instructions executable by a processor, the machine-readable storage medium comprising instructions to operate processor to perform as per any of the example methods hereby described.

A computer readable storage according to this disclosure may be any electronic, magnetic, optical or other physical storage device that stores executable instructions. The computer readable storage may be, for example, Random Access Memory (RAM), an Electrically Erasable Programmable Read Only Memory (EEPROM), a storage drive, and optical disk, and the like. As described hereby, the computer readable storage may be encoded with executable instructions according to the methods hereby described.

Storage or memory may include any electronic, magnetic, optical or other physical storage device that stores executable instructions as described hereby.

Examples are disclosed according to the following clauses:
Clause 1. A method for providing sidelink resources to a plurality of mobile devices comprising a specific mobile device located in a source cell operated by a source base station, the method comprising:
   - providing, by the source base station, source sidelink resources to the specific mobile device;
   - receiving, at the source base station, an indication that the specific mobile device is moving from the coverage of the source cell to the coverage of the destination cell operated by a destination base station;
   - negotiating, by the source base station, common sidelink special resources with the destination base station, whereby the source and destination base stations have some common resources;
   - reconfiguring, by the source base station, at least the sidelink resources provided to the specific mobile device from the source sidelink resources to the common sidelink special resources;
   - triggering, by the source base station, a handover of the specific mobile device from the source base station to the destination base station.
Clause 2. The method according to clause 1, comprising the source base station identifying the destination base station following the receiving of the indication that the specific mobile device is moving from the source cell to the destination cell, whereby the destination cell is identified as pertaining to a public land mobile network, PLMN, differing from a source base station PLMN, the method further comprising receiving at the source base station and from the specific mobile device, measurements performed on the destination base station.
Clause 3. The method according to any of the above clauses, whereby the common resources comprise a common part of a frequency spectrum.
Clause 4. The method according to any of the above clauses, whereby the negotiating comprises exchanging between the source and the destination base station one or more of the following information:
   - frequency domain resources information;
   - time domain resources information;
   - common sidelink special resources information;
   - geographical limitation information;
   - information related to the plurality of mobile devices;
   - information related to communication traffic between mobile devices belonging to the plurality of mobile devices;
   - time synchronization difference information; or
   - frequency synchronization difference information.
Clause 5. The method according to any of the above clauses, the method further comprising the source base station exchanging data with a multi-access edge computing node, MEC node, whereby the MEC node is monitoring sidelink packet traffic with a network exposure function, NEF, and whereby the MEC node adjusts an error protection process in function of the monitoring.
Clause 6. A method for providing sidelink resources to a plurality of vehicles comprising a specific mobile device moving from the coverage of a source cell operated by a source base station to the coverage of a destination cell operated by a destination base station, the method comprising:
   - receiving, at the destination base station and from the source base station, a request to negotiate common sidelink special resources with the source base station, whereby the source and destination base stations have some common resources;
   - negotiating, by the destination base station, the common sidelink special resources with the source base station;
   - receiving, at the destination base station, an indication that the specific mobile device is moving from the coverage of the source cell to the coverage of the destination cell, the specific mobile device operating the common sidelink special resources;
   - completing a handover of the specific mobile device from the source base station to the destination base station;
   - maintaining, by the destination base station, the common sidelink special resources operated by the specific mobile device, until a destination reconfiguration event occurs;
   - reconfiguring, by the destination base station, at least the sidelink resources provided to the specific mobile device from the common sidelink special resources to destination sidelink resources.
Clause 7. A method for providing sidelink resources to a plurality of mobile devices comprising a specific mobile device moving from the coverage of a source cell operated by a source base station to the coverage of a destination cell operated by a destination base station, the method comprising:
   - receiving, from the source base station and at the specific mobile device, source sidelink resources;
   - operating, by the specific mobile device, the source sidelink resources to exchange data with at least one other mobile devices comprised in the plurality of mobile devices;
   - following an indication that the specific mobile device is moving from the source cell to the destination cell, receiving from the source base station common sidelink special resources negotiated between the source base station and the destination base station, whereby the source and destination base stations have some common resources;
   - reconfiguring, by the specific mobile device, at least the sidelink resources from the source sidelink resources to the common sidelink special resources to exchange data with the at least one other mobile devices comprised in the plurality of mobile devices;
   - following the reconfiguration of the sidelink resources from the source sidelink resources to the common sidelink special resources, proceeding, at the specific mobile device, with a handover from the source base station to the destination base station;
   - maintaining, at the specific mobile device, the common sidelink special resources, until a destination reconfiguration event occurs;
   - reconfiguring, at the specific mobile device, at least the sidelink resources from the common sidelink special resources to destination sidelink resources provided by the destination base station.
Clause 8. The method according to clause 7, further comprising transmitting, by the specific mobile device and to the source base station one or more of:
   - specific mobile device location information;
   - a specific mobile device status as member of the plurality of mobile devices;
   - an identifier of the plurality of mobile devices;
   - information from a radio network information service, RNIS;
   - a situation update, the situation update comprising one or more of a report from another mobile device comprised in the plurality of mobile devices;
   - sidelink traffic information.
Clause 9. The method according to either one of clauses 7 or 8, the specific mobile device receiving, using the source sidelink resources, from another mobile device comprised in the plurality of mobile devices, one or more of:
   - signal measurement information;
   - sidelink traffic information.
Clause 10. The method according to any one of clause 7 to 9, whereby the destination reconfiguration event comprises one or more of:
   - the expiration of a timer;
   - the detection of the presence of some or all mobile devices pertaining to the plurality of mobile devices in the destination cell.
Clause 11. The method according to any one of clauses 7 to 10, whereby the proceeding, at the specific mobile device, with a handover from the source base station to the destination base station further comprises the specific mobile device transmitting through the common sidelink special resources handover information to another mobile device comprised in the plurality of mobile devices.
Clause 12. A computer-readable storage medium comprising instructions which, when executed by a processor, cause the processor to carry out the method of any of the above clauses.
Clause 13. A base station comprising a computing device, the computing device comprising a processor, a memory and a networking module, the processor being configured to operate according to any of method clauses 1 to 6.
Clause 14. A mobile device comprising a computing device, the computing device comprising a processor, a memory and a networking module, the processor being configured to operate according to any of method clauses 7 to 11.

## Claims

1. A method for providing sidelink resources to a plurality of mobile devices comprising a specific mobile device located in a source cell operated by a source base station, the method comprising:
- providing, by the source base station, source sidelink resources to the specific mobile device;
- receiving, at the source base station, an indication that the specific mobile device is moving from the coverage of the source cell to the coverage of the destination cell operated by a destination base station;
- negotiating, by the source base station, common sidelink special resources with the destination base station, whereby the source and destination base stations have some common resources;
- reconfiguring, by the source base station, at least the sidelink resources provided to the specific mobile device from the source sidelink resources to the common sidelink special resources;
- triggering, by the source base station, a handover of the specific mobile device from the source base station to the destination base station;
- whereby the source base station is exchanging data with a multi-access edge computing node, MEC node, or with another application function, whereby the MEC node or the another application function is monitoring sidelink packet traffic with a network exposure function, NEF, and whereby the MEC node or the another application function adjusts an error protection process in function of the monitoring.

2. The method according to claim 1, comprising the source base station identifying the destination base station following the receiving of the indication that the specific mobile device is moving from the source cell to the destination cell, whereby the destination cell is identified as pertaining to a public land mobile network, PLMN, differing from a source base station PLMN, the method further comprising receiving at the source base station and from the specific mobile device, measurements performed on the destination base station.

3. The method according to any of the above claims, whereby the common resources comprise a common part of a frequency spectrum.

4. The method according to any of the above claims, whereby the negotiating comprises exchanging between the source and the destination base station one or more of the following information:
- frequency domain resources information;
- time domain resources information;
- common sidelink special resources information;
- geographical limitation information;
- information related to the plurality of mobile devices;
- information related to communication traffic between mobile devices belonging to the plurality of mobile devices;
- time synchronization difference information; or
- frequency synchronization difference information.

5. A method for providing sidelink resources to a plurality of vehicles comprising a specific mobile device moving from the coverage of a source cell operated by a source base station to the coverage of a destination cell operated by a destination base station, the method comprising:
- receiving, at the destination base station and from the source base station, a request to negotiate common sidelink special resources with the source base station, whereby the source and destination base stations have some common resources;
- negotiating, by the destination base station, the common sidelink special resources with the source base station;
- receiving, at the destination base station, an indication that the specific mobile device is moving from the coverage of the source cell to the coverage of the destination cell, the specific mobile device operating the common sidelink special resources;
- completing a handover of the specific mobile device from the source base station to the destination base station;
- maintaining, by the destination base station, the common sidelink special resources operated by the specific mobile device, until a destination reconfiguration event occurs;
- reconfiguring, by the destination base station, at least the sidelink resources provided to the specific mobile device from the common sidelink special resources to destination sidelink resources;
- whereby the destination base station is exchanging data with a multi-access edge computing node, MEC node, or with another application function, whereby the MEC node or the another application function is monitoring sidelink packet traffic with a network exposure function, NEF, and whereby the MEC node or the another application function adjusts an error protection process in function of the monitoring.

6. Process of acquiring knowledge that at least a platoon member heads out of coverage of a source base station, the process comprising:
- connecting a multi-access edge computing node, MEC node, or another application function to both a source and destination station; and
- using a location application program interface to detect an event of handover of a platoon user equipment.

7. The process of claim 6, whereby the connecting is through a point to point interaction.

8. The process of any of claims 6 or 7, whereby the connecting is through a User Plane Function.

9. The process of any of claims 6 to 8, comprising registering platoon members into a multicast group.

10. The process of any of claims 6 to 9, comprising receiving, at a location server, a new location of the platoon user equipment.

11. The process of claim 10, whereby Received signal Received Power, RSRP, or Received Signal Received Quality, RSRQ are above a threshold.

12. A computer-readable storage medium comprising instructions which, when executed by a processor, cause the processor to carry out the method of any of the above claims.

13. A base station comprising a computing device, the computing device comprising a processor, a memory and a networking module, the processor being configured to operate according to any of method claims 1 to 5.

14. A multi-access edge computing, MEC, node comprising a computing device, the computing device comprising a processor, a memory and a networking module, the processor being configured to operate according to any of method claims 6 to 11.

15. The MEC node according to claim 14, whereby the MEC node comprises one or more of a radio network information service, RNIS, and a traffic control node.
